# EUROPEAN PATENT APPLICATION

(11) **EP 3 588 402 A1**
(43) Date of publication of application: **01.01.2020**
(21) Application number: 19172193.5
(22) Date of filing: 02.05.2019
(51) Int. Cl.: G06Q 10/06, G06Q 10/08, G06Q 10/00

(54) **AIRCRAFT MANAGEMENT SYSTEM**

(30) Priority: 29.06.2018 JP 2018124160
(71) Applicant: Subaru Corporation, Tokyo 150-8554 (JP)
(72) Inventor: SOEJIMA, Hideki, Tokyo, 150-8554 (JP)
(74) Representative: Sajda, Wolf E.

(57) **Abstract**

An aircraft management system (100) includes a sensor (230), a diagnosis executor (244), and an outputter (246). The sensor (230) is loaded onto an aircraft (200). The diagnosis executor (244) diagnoses health of a part of the aircraft (200) on a basis of output from the sensor (230) while the aircraft (200) is flying. The outputter (246) outputs a request signal requesting a part replacement to an outside of the aircraft (200) through wireless communication, when a replacement of the part is determined to be necessary as a result of diagnosis of the health.

## Description

### CROSS-REFERENCE TO RELATED APPLICATIONS

The present application claims priority from Japanese Patent Application JP 2018-124 160 A filed on June 29, 2018.

### BACKGROUND

The invention relates to an aircraft management system.

An aircraft is inspected and maintained while being at an airport. At this time, part replacement is performed as needed. For example, Japanese Unexamined Patent Application Publication JP 2013-193 812 A discloses a technology of deciding quantity of inventory of spare parts used for part replacement, on the basis of operating time and mean time between failures of the parts.

### SUMMARY

An aspect of the invention provides an aircraft management system including sensor, a diagnosis, and an outputter. The sensor is configured to be loaded onto an aircraft. The diagnosis executor is configured to diagnose health of a part of the aircraft on a basis of output from the sensor while the aircraft is flying.

The outputter is configured to output a request signal requesting a part replacement to an outside of the aircraft through wireless communication, when a replacement of the part is determined to be necessary as a result of diagnosis of the health.

### BRIEF DESCRIPTION OF THE DRAWINGS

The accompanying drawings are included to provide a further understanding of the invention and are incorporated in and constitute a part of this specification. The drawings illustrate example embodiments and, together with the specification, serve to explain the principles of the invention.
- FIG. 1: is a diagram illustrating an aircraft management system;
- FIG. 2: is a block diagram illustrating a configuration of a diagnosis device;
- FIG. 3: is an explanatory diagram of a vibrator and optical fiber sensors;
- FIG. 4: is a block diagram illustrating a configuration of an inventory management server;
- FIG. 5: is a flowchart illustrating procedure of a process of the diagnosis device; and
- FIG. 6: is a flowchart illustrating procedure of a process of the inventory management server.

### DETAILED DESCRIPTION

In the following, some embodiments of the invention are described in detail with reference to the accompanying drawings. Note that sizes, materials, specific values, and any other factors illustrated in respective embodiments are illustrative for easier understanding of the invention, and are not intended to limit the scope of the invention unless otherwise specifically stated. Further, elements in the following example embodiments which are not recited in a most-generic independent claim of the invention are optional and may be provided on an as-needed basis.

Throughout the present specification and the drawings, elements having substantially the same function and configuration are denoted with the same reference numerals to avoid any redundant description. Further, elements that are not directly related to the invention are unillustrated in the drawings. The drawings are schematic and are not intended to be drawn to scale.

As described above, the technology described in JP 2013-193 812 A estimates proper quantity of inventory from the mean time between failures. However, the mean time between failures is based on failure records in the past, and inventory shortage occurs if estimation goes wrong. If it takes too much time to procure parts, maintenance may be delayed to exert influence on flight schedules.

It is desirable to provide the aircraft management system that makes it possible to suppress delay of maintenance due to shortage of parts.

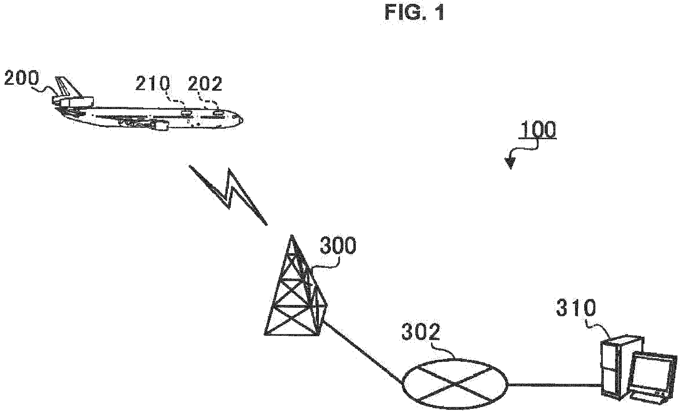

FIG. 1 is a diagram illustrating an aircraft management system 100. As illustrated in FIG. 1, the aircraft management system 100 includes a diagnosis device 210 and an inventory management server 310. The diagnosis device 210 is prepared for each of the aircrafts 200, and loaded onto each of the aircrafts 200. The inventory management server 310 is prepared for each airport, for example.

The diagnosis device 210 communicates with the inventory management server 310 via a wireless communication device 202 loaded onto the aircraft 200, a base station 300, and a communication network 302 (Such as a LAN or the Internet). Hereinafter, the diagnosis device 210 will be described first, and then the inventory management server 310 will be described next.

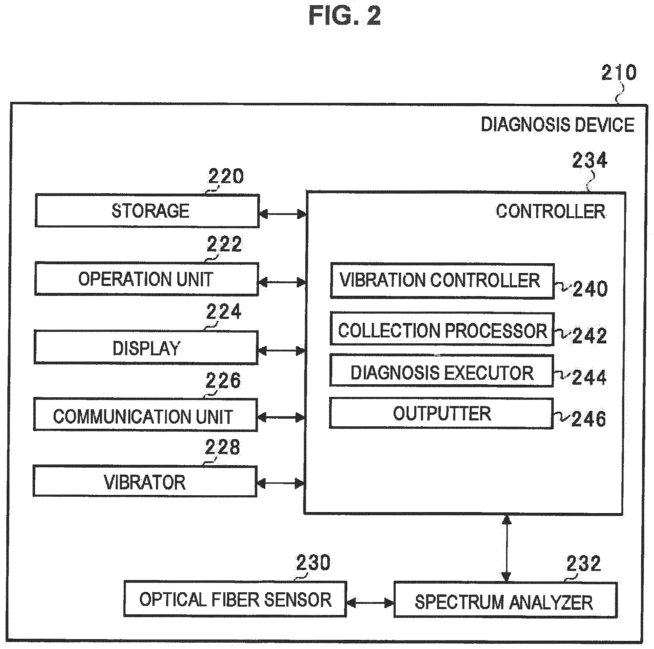

FIG. 2 is a block diagram illustrating a configuration of the diagnosis device 210. As illustrated in FIG. 2, the diagnosis device 210 includes a storage 220, an operation unit 222, a display 224, a communication unit 226, a vibrator 228, an optical fiber sensor 230 (sensor), a spectrum analyzer 232, and a controller 234.

The storage 220 is implemented as RAM, flash memory, an HDD, or the like. For example, the operation unit 222 is implemented as a keyboard or a touchscreen that is superimposed on the display 224. The operation unit 222 receives operation input from a user. The display 224 is implemented as a liquid crystal display, an organic electro-luminescence (EL) display, or the like.

The communication unit 226 communicates with the wireless communication device 202 loaded onto the aircraft 200 in a wired manner, for example. The vibrator 228 is implemented as piezoelectric elements (piezo elements) attached to a sheet.

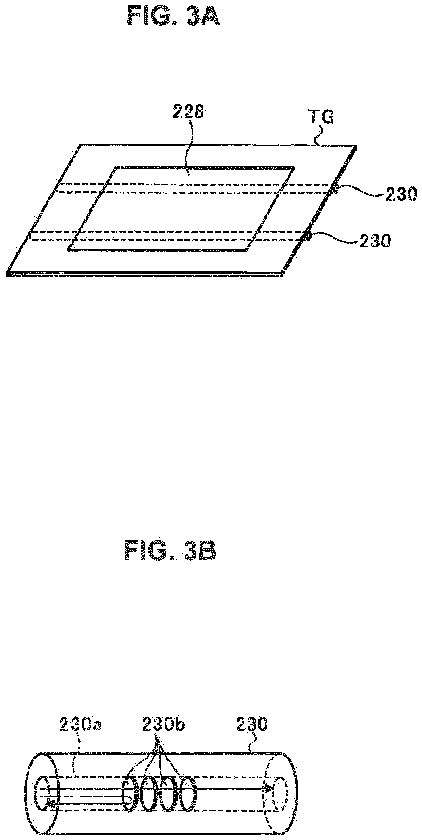

FIG. 3 is an explanatory diagram illustrating the vibrator 228 and the optical fiber sensors 230. FIG. 3A illustrates a target TG to which the vibrator 228 and the optical fiber sensors 230 are attached. FIG. 3B illustrates an internal configuration of the optical fiber sensor 230.

For example, the target TG is a part included in the aircraft 200. The number of the targets TG is two or more, and the vibrator 228 and the optical fiber sensors 230 are prepared for each of the targets TG. Here, a case where the targets TG are plate-like members is taken as an example. However, the shapes of the targets TG are not limited thereto. The vibrator 228 and the optical fiber sensors 230 are attached to (installed on) the target TG in an appropriate manner based on the shape of the target TG.

The piezoelectric elements of the vibrator 228 are coupled to a conducting wire (not illustrated). When a voltage is applied to a piezoelectric element via the conducting wire, the thickness of the piezoelectric element changes due to the piezoelectric effect. When a pulse voltage is applied to any piezoelectric element among the piezoelectric elements, the vicinity of the piezoelectric element to which the voltage is applied gets vibrated in the target TG. In such a way, the vibrator 228 vibrates the target TG.

For example, the optical fiber sensor 230 is intrinsic. In other words, in the optical fiber sensor 230, the optical fiber itself functions as a sensor element. However, the optical fiber sensor 230 may be an extrinsic optical fiber sensor that causes the optical fiber to function only as an optical transmission line to/from another sensor element. For example, the optical fiber sensor 230 is bonded to the target TG with adhesive.

As illustrated in FIG. 3B, a core 230a is installed in the inside of a coating or cladding of the optical fiber sensor 230. Light passes through the core 230a. Light transmitting trough the core 230a toward an outside is reflected by the cladding and returned to the core 230a.

Grating members 230b are installed in the core 230a. The grating members 230b have different refractive indices from the other parts of the core 230a. The grating members 230b are installed apart from each other in the axis direction of the optical fiber. The grating members 230b cause the refractive indices to change periodically (fiber Bragg grating (FBG)).

In the grating members 230b, broadband spectrum light interferes with a specific wavelength called Bragg wavelength in a direction in which they strengthen each other. In such a way, the grating members 230b reflects only a specific wavelength component in the broadband spectrum light. Light of the other wavelength passes through the grating members 230b.

The wavelength of reflected light is changed when disturbance is added to the grating members 230b. The disturbance added to the grating members 230b is measured by measuring the change in the wavelength of the reflected light.

The spectrum analyzer 232 illustrated in FIG. 2 is coupled to the optical fiber sensors 230. The spectrum analyzer 232 includes a light source and a light receiver. The light source emits broad spectrum light, and the broad spectrum light reaches the optical fiber sensors 230. As described above, the optical fiber sensor 230 reflects a part of the light. The light receiver of the spectrum analyzer 232 receives the reflected light.

The spectrum analyzer 232 detects light intensity distribution in a predetermined wavelength band. The spectrum analyzer 232 detects the wavelength of the reflected light received by the light receiver. The wavelength detected by the spectrum analyzer 232 is converted from analog to digital by an A/D converter (not illustrated), and output to the controller 234.

The controller 234 manages and controls the whole diagnosis device 210 by using a semiconductor integrated circuit including a central processing unit (CPU), ROM having a program or the like stored therein, RAM that functions as a work area, and the like. In addition, the controller 234 also functions as a vibration controller 240, a collection processor 242, a diagnosis executor 244, and an outputter 246.

The vibration controller 240 applies voltage to the vibrator 228 and causes the vibrator 228 to vibrate the target TG.

The collection processor 242 measures each of the targets TG by using the optical fiber sensors 230. As described above, the collection processor 242 causes the spectrum analyzer 232 to emit the broad spectrum light and detect the wavelength of reflected light. The collection processor 242 uses the wavelength of the reflected light to measure change in the target TG that is a cause of the disturbance added to the grating members 230b.

For example, with regard to the optical fiber sensor 230, a physical quantity is set in advance. The physical quantity is a target of measurement such as distortion (stress) or temperature of the target TG. In other words, an optical fiber sensor 230 for measuring distortion, an optical fiber sensor 230 for measuring temperature, and the like are installed.

The collection processor 242 measures distortion of the target TG by using reflected light from the optical fiber sensor 230 for measuring distortion. In addition, the collection processor 242 measures temperature of the target TG by using reflected light from the optical fiber sensor 230 for measuring temperature.

In addition, the collection processor 242 may measure distortion of the target TG by using reflected light from the optical fiber sensor 230 for measuring distortion while the vibration controller 240 is controlling the vibrator 228 and the vibrator 228 is vibrating the target TG.

If there is a deficient target TG between a piezoelectric element of the vibrator 228 and the optical fiber sensor 230, different distortion (vibration) is measured in comparison with a case where there is no deficient target. In such a way, it is possible to detect the deficient target TG.

As described above, the collection processor 242 performs a correction process for collecting measurement data of the targets TG from the optical fiber sensors 230.

The diagnosis executor 244 performs a health diagnosis process for diagnosing health of the targets TG of the aircraft 200 on the basis of the collected measurement data. The collection process and the health diagnosis process are performed at any timing while the aircraft 200 is flying.

In the health diagnosis process, the health of a structure is diagnosed by using the collected measurement data of the targets TG. For example, the diagnosis executor 244 uses, as standard data, measurement data obtained when there is no distortion and no deficiency such as a timing immediately after the diagnosis device 210 is loaded onto the aircraft 200.

The diagnosis executor 244 derives evaluation values by comparing new measurement data with the standard data (by using differences, ratios, or the like between the new measurement data and the standard data). For example, the health is calculated as a low evaluation value when the deficient target TG is detected or when the distortion or the temperature shows an abnormal value, as described above.

As a result of the health diagnosis process, the diagnosis executor 244 determines whether replacement of a part such as the target TG is necessary. For example, the diagnosis executor 244 determines that the part such as the target TG needs to be replaced when the evaluation value is less than a preset threshold. Here, the part such as the target TG includes any of the target TG itself and a part constituting a portion of the target TG.

On the storage 220, a type table is registered. In the type table, parts such as the targets TG constituting the aircraft 200 are associated with type information indicating types of the respective parts. The diagnosis executor 244 refers to the type table in the storage 220 and specifies the type information of a part that needs replacement.

When it is determined that replacement is necessary for a part as a result of diagnosis of health performed by the diagnosis executor 244, the outputter 246 controls the communication unit 226 and outputs a request signal to an outside of the aircraft 200 through wireless communication. The request signal is a signal requesting part replacement, and includes type information and quantity of a part that needs replacement. The outside of the aircraft 200 is, for example, the inventory management server 310 installed in an airport where the aircraft 200 will arrive next.

On the storage 220 of the diagnosis device 210, an address of an airport where the aircraft 200 will arrive next in the communication network 302 is registered via the operation unit 222. Therefore, it is possible for the outputter 246 to output a request signal to the registered address.

Here, the case where the address of the airport where the aircraft 200 will arrive next in the communication network 302 is registered via the operation unit 222, has been described above. However, it is also possible that an address table is registered on the storage 220 and the outputter 246 specifies an address on the basis of an input airport name and the address table.

In the address table, names of airports are associated with addresses in the communication network 302. In addition, the outputter 246 may acquire the address and the name of the airport where the aircraft 200 will arrive next from a controller (not illustrated) of the aircraft 200.

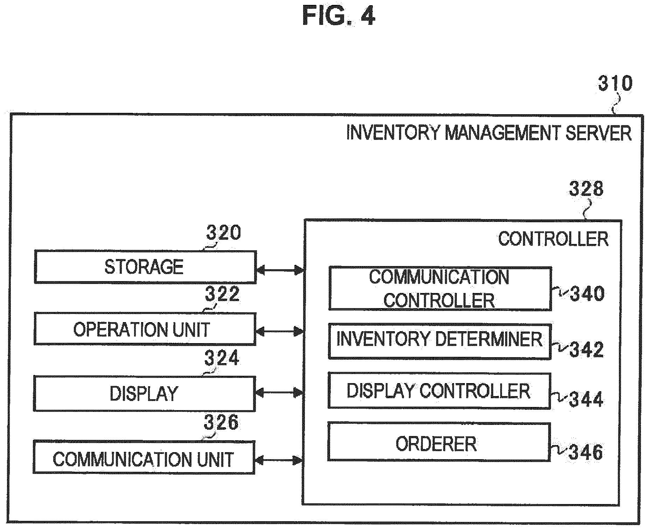

FIG. 4 is a block diagram illustrating a configuration of the inventory management server 310. As illustrated in FIG. 4, the inventory management server 310 includes a storage 320, an operation unit 322, a display 324, a communication unit 326, and a controller 328.

The storage 320 is implemented as RAM, flash memory, an HDD, or the like. For example, the operation unit 322 is implemented as a keyboard or a touchscreen that is superimposed on the display 324. The operation unit 322 receives operation input from a user.

The display 324 is implemented as a liquid crystal display, an organic EL display, or the like. The communication unit 326 communicates with the diagnosis device 210 via the communication network 302, the base station 300, and the wireless communication device 202 of the aircraft 200.

The controller 328 manages and controls the whole inventory management server 310 by using a semiconductor integrated circuit including a central processing unit (CPU), ROM having a program or the like stored therein, RAM that functions as a work area, and the like. In addition, the controller 328 also functions as a communication controller 340, an inventory determiner 342, a display controller 344 (reporter), and an orderer 346.

The communication controller 340 controls the communication unit 326 and acquires a request signal output from the outputter 246 of the diagnosis device 210. When the request signal is input from the communication unit 326, the inventory determiner 342 determines whether a spare part (herein after, referred to simply as "the part") of a part determined to need replacement is short in inventory in an airport where the inventory management server 310 is installed (an airport where the aircraft 200 will arrive next).

On the storage 320, an inventory table in which types of parts are associated with quantity of inventory is registered. The inventory determiner 342 specifies quantity of inventory of a part with the type information indicated by the request signal, from the inventory table.

When the quantity of inventory of the part is smaller than the quantity indicated by the request signal, the inventory determiner 342 determines that inventory is short. When the quantity of inventory of the part is equal to or greater than the quantity indicated by the request signal, the inventory determiner 342 determines that inventory is not short.

When inventory is determined to be short for the part with the type information indicated by the request signal, the display controller 344 causes the display 324 to display (report) that inventory is short.

When inventory is determined to be short for the part with the type information indicated by the request signal, the orderer 346 orders the part. For example, the orderer 346 generates, in a preregistered format, data of a purchase order containing a part type (part name) determined to be short in inventory and quantity. The orderer 346 controls the communication unit 326, and transmits the generated data of the purchase order to a part supplier via the communication network 302.

Here, the orderer 346 may be a function loaded into a device dedicated for ordering parts. In this case, the inventory determiner 342 outputs type information and shortage quantity of the part determined to be short in inventory to the device dedicated for ordering parts via the communication unit 326. The device dedicated for ordering parts generates data of a purchase order, on the basis of the input type information and shortage quantity of the part.

As described above, in the aircraft management system 100, a result of the health diagnosis process performed while the aircraft 200 is flying is output to the inventory management server 310 through wireless communication. The inventory management server 310 can specify inventory shortage of a part to be replaced while the aircraft 200 is flying. Therefore, an order for the part whose inventory is short is placed early, which can suppress delay of maintenance due to shortage of parts.

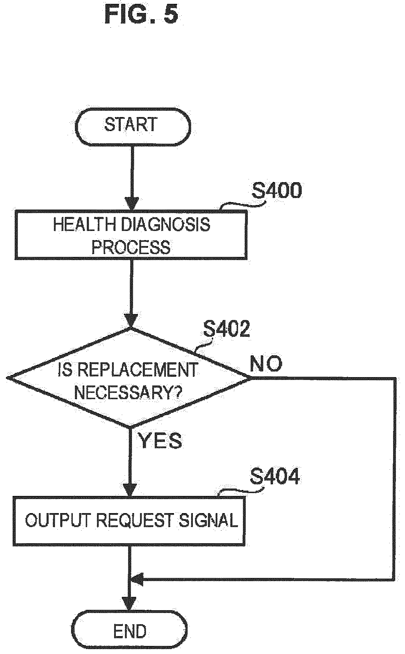

FIG. 5 is a flowchart illustrating procedure of a process of the diagnosis device 210. The process illustrated in FIG. 5 is performed at any timing (for example, is repeated on a predetermined cycle) while the aircraft 200 is flying.

### Step S400

The diagnosis executor 244 performs the health diagnosis process for diagnosing health of a target TG of an aircraft 200 on the basis of measurement data collected by the collection processor 242.

### Step S402

As a result of the health diagnosis process, the diagnosis executor 244 determines whether the replacement is necessary for the part such as the target TG. The process proceeds to Step S404 when it is determined that the part replacement is necessary (YES in Step S402). The process ends when it is determined that the part replacement is not necessary (NO in Step S402).

### Step S404

As a result of health diagnosis by the diagnosis executor 244, when part replacement is determined to be necessary, the outputter 246 controls the communication unit 226, and outputs a request signal to the inventory management server 310 installed in an airport where the aircraft 200 will arrive next through wireless communication.

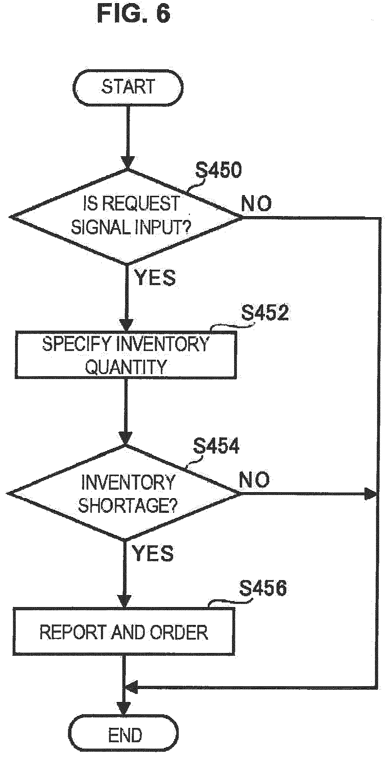

FIG. 6 is a flowchart illustrating procedure of a process of the inventory management server 310. The process illustrated in FIG. 6 is repeated on a predetermined cycle, for example.

### Step S450

The inventory determiner 342 determines whether the request signal is input from the communication unit 326. The process proceeds to Step S452 in the case where the request signal is input (YES in Step S450). The process ends in the case where the request signal is not input (NO in Step S450).

### Step S452

The inventory determiner 342 specifies quantity of inventory of a part with the type information indicated by the request signal, from an inventory table in the storage 320.

### Step S454

The inventory determiner 342 determines whether inventory is short, i.e., whether the quantity of inventory of the part is smaller than the quantity indicated by the request signal. In the case of inventory shortage (YES in S454), the process proceeds to S456. In the case of no inventory shortage (NO in S454), the process ends.

### Step S456

The display controller 344 causes the display 324 to display (report) that the part with the type information indicated by the request signal is short in inventory. The orderer 346 orders the part with the type information indicated by the request signal.

Although preferred embodiments of the invention have been described in detail with reference to the appended drawings, the invention is not limited thereto. It is obvious to those skilled in the art that various modifications or variations are possible insofar as they are within the technical scope of the appended claims or the equivalents thereof. It should be understood that such modifications or variations are also within the technical scope of the invention.

For example, in the above-described embodiment, the vibrator 228 and the optical fiber sensors 230 have been used as examples. However, it is possible to use other sensors. The vibrator 228 is not an essential structural element. In addition, the fiber Bragg grating optical fiber sensors 230 have been used as examples.

However, it is possible to use optical fiber sensors 230 of another type. It is possible to measure a physical quantity or a chemical quantity of a target TG by using not change in wavelength of light but change in other characteristics (intensity, phase, frequency, or polarized wave).

In addition, described in the above-described embodiment is a case where the outputter 246 outputs a request signal to an address of the inventory management server 310 of an airport where the aircraft 200 will arrive next. However, for example, there may be installed an integrated server that manages part inventory in maintenance factories of airports.

In this case, the outputter 246 may output a request signal to the integrated server. Then, the integrated server may determine inventory shortage in the maintenance factory of the airport where the aircraft 200 will arrive next.

In addition, described in in the above-described embodiment is a case where a request signal is input to the inventory management server 310. In this case, inventory shortage can be specified reliably, because inventory shortage is automatically determined on the basis of the request signal.

However, a worker may acquire a request signal via a terminal, and operate the operation unit 322 of the inventory management server 310 to determine inventory shortage of a part with type information indicated by the request signal.

In addition, described in the above-described embodiment is a case where the display controller 344 functions as a reporter. In this case, the worker can check inventory shortage via the display 324. However, the display controller 344 need not function as a reporter. In addition, inventory shortage may be reported by sound, light emission of a dedicated lamp, or the like, as well as display on the display 324.

In addition, described in the above-described embodiment is a case where the orderer 346 is installed. The orderer 346 automatically orders a part whose inventory is short; thus, forgetting to place an order is avoided. However, the orderer 346 is not an essential structural element.

### List of Reference Signs

- 100: Aircraft management system
- 200: Aircraft
- 202: Wireless communication device
- 210: Diagnosis device
- 220: Storage
- 222: Operation unit
- 224: Display
- 226: Communication unit
- 228: Vibrator
- 230: Optical fiber sensor
- 230a: Core
- 230b: Grating member
- 232: Spectrum analyzer
- 234: Controller
- 240: Vibration controller
- 242: Collection processor
- 244: Diagnosis executor
- 246: Outputter
- 300: Base station
- 302: Communication network
- 310: Inventory management server
- 320: Storage
- 322: Operation unit
- 324: Display
- 326: Communication unit
- 328: Controller
- 340: Communication controller
- 342: Inventory determiner
- 344: Display controller
- 346: Orderer
- TG: Target

## Claims

1. An aircraft management system (100) comprising:
- a sensor (230) configured to be loaded onto an aircraft (200);
- a diagnosis executor (244) configured to diagnose health of a part of the aircraft (200) on a basis of output from the sensor (230) while the aircraft (200) is flying; and
- an outputter (246) configured to output a request signal requesting a part replacement to an outside of the aircraft (200) through wireless communication, when a replacement of the part is determined to be necessary as a result of diagnosis of the health.

2. The aircraft management system (100) according to claim 1,
further comprising
an inventory management server (310) that comprises an inventory determiner (342) configured to determine, when the request signal is input, whether a spare part of the part determined to need a replacement is short in inventory in an airport where the aircraft (200) will arrive next.

3. The aircraft management system (100) according to claim 2,
wherein the inventory management server (310) further comprises a reporter configured to report that the spare part is short in inventory when the spare part is determined to be short in inventory.

4. The aircraft management system (100) according to claim 2 or 3,
wherein the inventory management server (310) further comprises an orderer (346) configured to order the spare part when the spare part is determined to be short in inventory.
